# EUROPEAN PATENT APPLICATION

(11) **EP 4 810 237 A1**
(43) Date of publication of application: **23.09.2026**
(21) Application number: 24891588.6
(22) Date of filing: 09.07.2024
(51) Int. Cl.: B29D 30/00, B29D 30/06, B29D 30/24, B60C 23/00

(54) **METHOD FOR MANUFACTURING TIRE INTEGRATED WITH ELECTRONIC DEVICE AND TIRE INTEGRATED WITH ELECTRONIC DEVICE MANUFACTURED THEREBY**

(30) Priority: 13.11.2023 KR 20230156066
(71) Applicant: HANKOOK TIRE & TECHNOLOGY CO., LTD, Gyeonggi-do 13494 (KR)
(72) Inventor: SO, Soon-Hong, Daejeon 34127 (KR)
(74) Representative: Zimmermann, Tankred Klaus
(86) International application number: PCT/KR2024/009732
(87) International publication number: WO 2025/105639

(57) **Abstract**

The present invention relates to a manufacturing method for a tire integrated with an electronic device and a tire integrated with an electronic device manufactured thereby. More specifically, attachment of the electronic device is facilitated during manufacturing processes, and damage to the electronic device is minimized. The the present invention comprising the steps of: marking an attachment position of an electronic device on a semi-finished tire product; attaching the electronic device in the attachment position; covering the attached electronic device with a rubber patch made of the same material as the semi-finished tire product; winding the semi-finished tire product around a molding drumand completing the molding thereof; and forming a tire by coupling the semi-finished tire product which has been completely molded.

## Description

### [TECHNICAL FIELD]

The present invention relates to a method for manufacturing a tire with an integrated electronic device and a tire with an integrated electronic device manufactured by the method. More specifically, it relates to a method for manufacturing a tire with an integrated electronic device that facilitates the attachment of the electronic device during the manufacturing process and minimizes damage to the electronic device, and a tire with an integrated electronic device manufactured by method.

### [BACKGROUND ART]

Recently, various methods for attaching a sensor inside a tire have been devised to receive real-time information about the tire status, which is directly related to the safety of vehicle occupants.

For example, Korean Patent No. 10-0614520 describes a method for attaching a tire-mounted sensor directly to the tire using an epoxy adhesive. This adhesive is viscous at room temperature and cures at temperatures below 100°C.

This method requires a minimum of several hours to 24 hours for adhesive vulcanization. This makes it unsuitable for the tire manufacturing process, necessitating attachment either when the tire is released or prior to tire replacement, creating inconvenience.

Furthermore, the sensor remains exposed externally, making it highly susceptible to damage if foreign matter enters the tire interior.

U.S. Patent No. 9,016,339 employs a method where a clamping ring capable of attaching the sensor is installed on the upper part of the tire's inner carcass, securing it by clamping, and then attaching the sensor.

While this allows sensor replacement using the clamping ring and improves attachment strength compared to adhesive methods through vulcanization, it has the drawbacks of requiring the clamping ring insertion before vulcanization, adding manufacturing steps, and potentially causing uneven pressure distribution during vulcanization due to the clamping ring.

U.S. Patent Publication No. 2014-0144210 employs a method where a fitting is installed inside the tire to secure the sensor. The sensor and its upper/lower cases are then attached and fixed to this fitting structure.

This method offers the advantages of securely fixing the sensor and enabling sensor replacement. However, the process of fitting the bracket to secure the sensor requires damaging the interior of the tire, which may compromise durability issues during prolonged driving.

U.S. Patent Publication No. 2009-0071249 discloses a method of inserting an acceleration sensor into the tire interior. While this method eliminates the risk of sensor detachment due to tire movement, the inclusion of a foreign object within the tire structure may affect durability.

### <Prior Art documents>

EP Patent No. 1977912

### [DETAILED DESCRIPTION OF THE INVENTION]

### [TECHNICAL PROBLEM]

The objective of the present invention to solve the above-mentioned problems is to provide a manufacturing method for a tire with an integrated electronic device that facilitates the attachment of the electronic device during the manufacturing process and minimizes damage to the electronic device, and a tire with an integrated electronic device manufactured by this method.

The technical problems addressed by the present invention are not limited to those described above and further include other problems that may be understood by a person skilled in the art from the descriptions of this specification.

### [SOLUTION TO PROBLEM]

The configuration of the present invention to achieve the above objectives comprising: a step of marking an attachment position of the electronic device on the semi-finished tire product; a step of attaching the electronic device at the marked attachment position; a step of covering the attached electronic device with a rubber patch made of the same material as the semi-finished tire product; a step of wrapping the semi-finished tire product around a molding drum to complete molding; and a step of bonding the molded semi-finished tire product to form a tire.

The configuration of the present invention to achieve the above purpose comprising: a step of partially winding a semi-finished tire product onto a molding drum; a step of marking an attachment position for the electronic device while the semi-finished tire product is wound on the molding drum; a step of attaching the electronic device at the marked attachment position; a step of covering the attached electronic device with a rubber patch made of the same material as the semi-finished tire product; a step of wrapping the semi-finished tire product around the molding drum to complete molding; and a step of bonding the molded semi-finished tire product to form a tire.

In an embodiment of the present invention, after the step of bonding the molded semi-finished tire product to form a tire, further comprising: a step of attaching a manufacturing barcode to the green tire; and a step of vulcanizing the tire to integrate with the electronic device.

In an embodiment of the present invention, after the step of vulcanizing the tire to integrate with the electronic device, further comprising: a step of reading and matching the manufacturing barcode with the tag ID of the electronic device and storing it in a database; a step of retrieving information recorded in the electronic device from a tire manufacturing information system and storing it in the database based on the tag ID; and a step of encrypting and providing to a user the supplementary information recorded in the database based on the stored tag ID via a network API.

In an embodiment of the present invention, wherein the electronic device is provided with three or more separate memories, and each of the memories is provided to separately store and provide the tag ID, tire ID, and tire information.

In an embodiment of the present invention, wherein the electronic device is attached to the inner liner surface at a point having a radius of 30 to 60 mm, based on a first point where an end point of the bead wire and the bead wire rubber meet.

In an embodiment of the present invention, wherein the electronic device is attached to the inner liner surface at a point having a radius of 41 to 55 mm based on the first point where an end point of the bead wire and the bead wire rubber meet.

In an embodiment of the present invention,
wherein the first point is where the bead wire and bead wire rubber meet, the second point is where the end of the bead filler, and the third point is where the end of the carcass and belt, wherein the electronic device is positioned between the first point and the second point or between the second point and the third point.

In an embodiment of the present invention, wherein the electronic device is positioned at a point corresponding to 10 to 80 % of the length from the first point to the second point between the first point and the second point.

In an embodiment of the present invention, wherein the electronic device is positioned at a point corresponding to 15 to 95% of the length from the second point to the third point between the second point and the third point.

A tire with an integrated electronic device according to the present invention, wherein the first point is where the bead wire and bead wire rubber meet, the second point is where the end of the bead filler, and the third point is where the end of the carcass and belt, wherein the electronic device is positioned between the first point and the second point or between the second point and the third point.

In an embodiment of the present invention, wherein the electronic device is provided in a form where it is attached to the inner liner surface, the electronic device is partially covered by the rubber patch, and inserted into the interior of the inner liner.

In an embodiment of the present invention, wherein the rubber patch of the electronic device is the same physical properties as the inner liner.

### [ADVANTAGEOUS EFFECTS]

The effect of the present invention according to the above configuration is that it facilitates attaching the electronic device to the tire during the manufacturing process, and since the semi-finished tire product is integrated, damage to the electronic device can be minimized.

The effects of the present invention are not limited to the above effects, but should be understood to include all effects inferable from the configuration of the invention described in the detailed description or the claims.

### [BRIEF DESCRIPTION OF THE DRAWINGS]

Fig. 1 shows a tire with an integrated electronic device according to a first embodiment of the present invention.
Fig. 2 shows a diagram illustrating the configuration of the electronic device according to an embodiment of the present invention.
Fig. 3 shows a plate-type electronic device according to an embodiment of the present invention.
Fig. 4 and 5 show the first point and second point of a tire according to an embodiment of the present invention.
Fig. 6 and 7 show the first point, second point, and third point of the tire according to an embodiment of the present invention.
Fig. 8 and 9 show the process of attaching the electronic device to the tire.
Fig. 10 shows a diagram showing the state where the electronic device is integrated into the tire according to an embodiment of the present invention.
Fig. 11 shows a flowchart of a manufacturing method for a tire with an integrated electronic device according to a second embodiment of the present invention.

### [BEST MODE]

The most preferred embodiment of the present invention comprising: a step of marking an attachment position of the electronic device on the semi-finished tire product; a step of attaching the electronic device at the marked attachment position; a step of covering the attached electronic device with a rubber patch made of the same material as the semi-finished tire product; a step of wrapping the semi-finished tire product around a molding drum to complete molding; and a step of bonding the molded semi-finished tire product to form a tire.

### [DESCRIPTION OF EMBODIMENTS]

Hereinafter, the present invention is described with reference to the accompanying drawings. However, the present invention may be modified in various different ways and is not limited to the embodiments described herein. Further, in the accompanying drawings, components irrelevant to the description will be omitted in order to clearly describe the present invention, and similar reference numerals will be used to describe similar components throughout the specification.

Throughout the specification, when an element is referred to as being "connected with(coupled to, combined with, in contact with)" another element, it may be "directly connected" to the other element and may also be "indirectly connected" to the other element with another element intervening therebetween. Further, unless explicitly described otherwise, "comprising" any components will be understood to imply the inclusion of other components rather than the exclusion of any other components.

Terms used in the present invention are used only in order to describe specific exemplary examples rather than limiting the present invention. Singular forms are intended to include plural forms unless the context clearly indicates otherwise. It will be further understood that the terms "comprise" or "have" used in this specification specify the presence of stated features, numerals, steps, operations, components, parts, or a combination thereof, but do not preclude the presence or addition of one or more other features, numerals, steps, operations, components, parts, or a combination thereof.

Terms '~er', '~unit', '~module', etc. used herein mean the units for processing at least one function or operation and may be implemented by hardware, software, or a combination of hardware and software.

Further, in the specification, when a step is positioned "before" or "after" another step, this includes the same right as not only when the step and another step are in a direct time-serial relationship, but when they are in an indirect time-serial relationship in which the orders of the two steps may be time-serially changed such as mixing of the steps after the steps.

Hereinafter, examples of the present invention are described in detail with reference to the accompanying drawings.

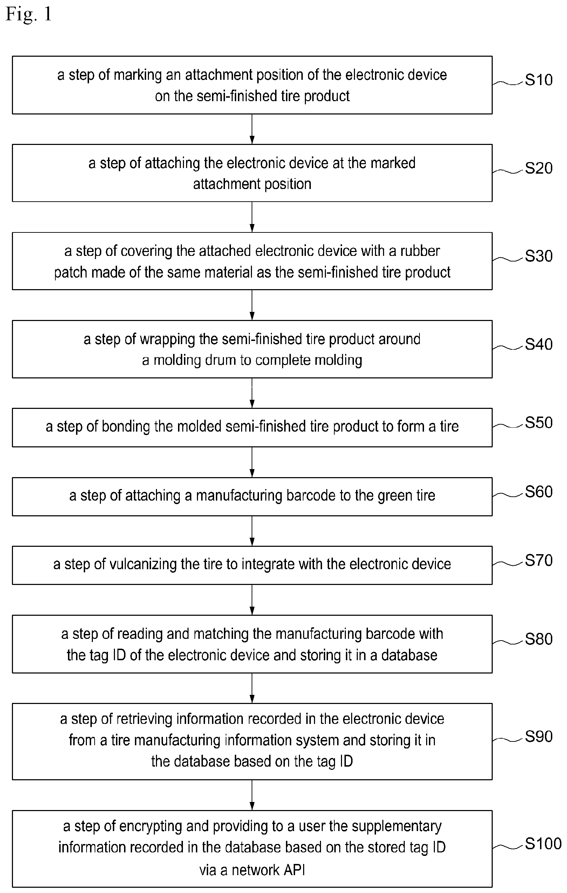

Fig. 1 is a flowchart of a manufacturing method for a tire integrated with an electronic device according to the first embodiment of the present invention.

Referring to Fig. 1, the manufacturing method for a tire with an integrated electronic device according to the first embodiment comprises: a step of marking an attachment position of the electronic device on the semi-finished tire product(S10); attaching the electronic device at the marked attachment position (S20), covering the attached electronic device with a rubber patch made of the same material as the semi-finished tire product (S30), wrapping the semi-finished tire product around a molding drum to complete molding (S40), bonding the molded semi-finished tire product to form a tire (S50), attaching a manufacturing barcode to the green tire(S60), vulcanizing the tire to integrate with the electronic device(S70), reading and matching the manufacturing barcode with the tag ID of the electronic device and storing it in a database(S80), retrieving information recorded in the electronic device from a tire manufacturing information system and storing it in the database based on the tag ID (S90), and encrypting and providing to a user the supplementary information recorded in the database based on the stored tag ID via a network API (S100).

Hereinafter, each step of the manufacturing method for a tire integrated with an electronic device will be described in detail.

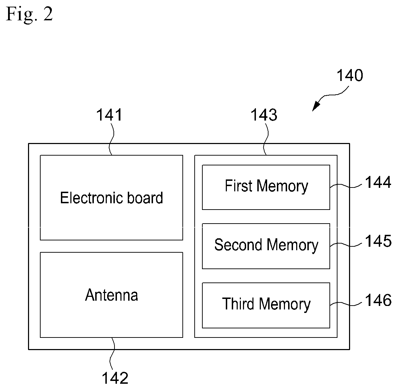

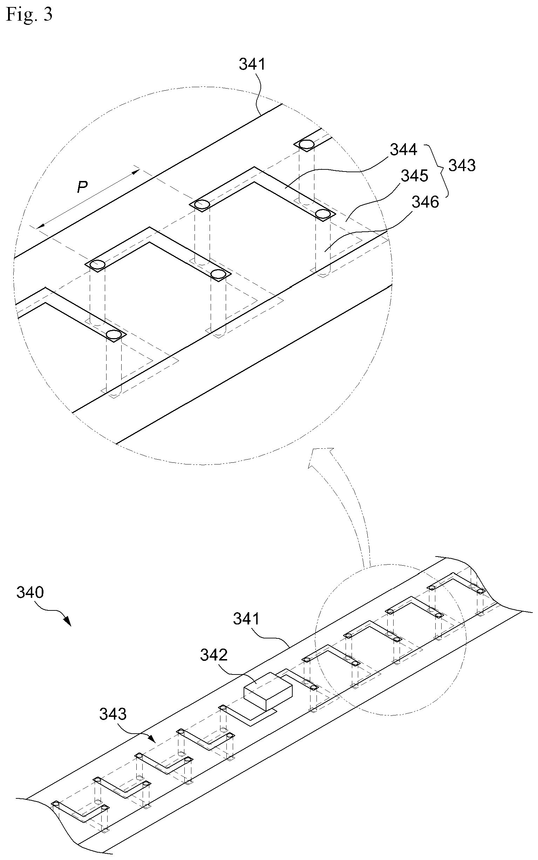

Fig. 2 is an example diagram illustrating the configuration of the electronic device according to an embodiment of the present invention, and Fig. 3 is an example diagram showing a plate-type electronic device according to an embodiment of the present invention.

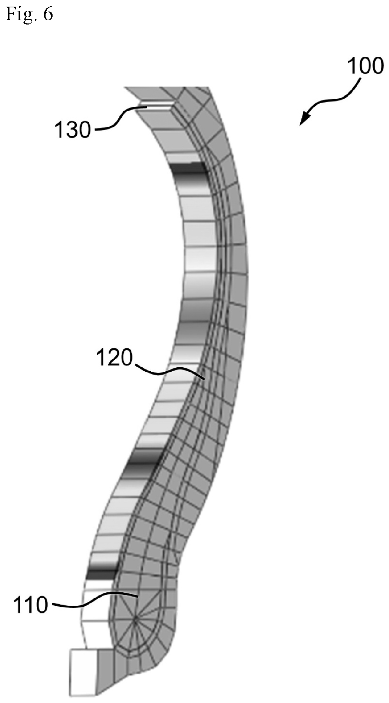

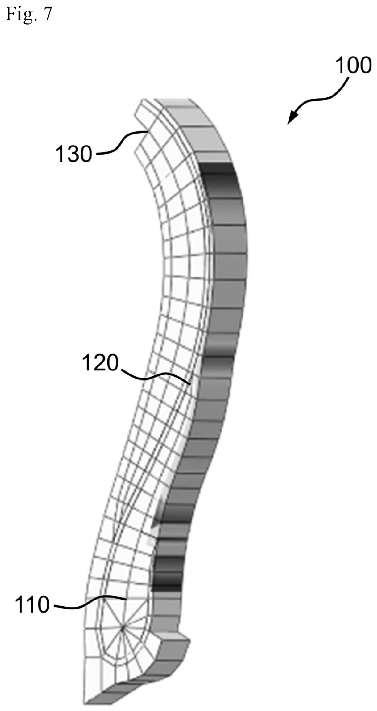

Fig. 6 and 7 are illustrative views showing the first point, second point, and third point of a tire according to an embodiment of the present invention.

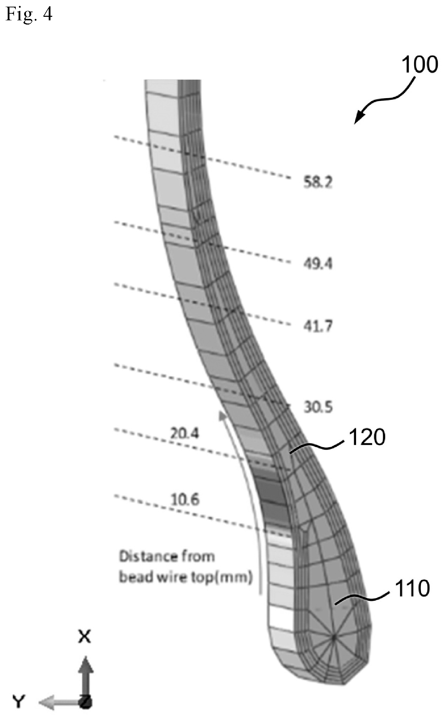

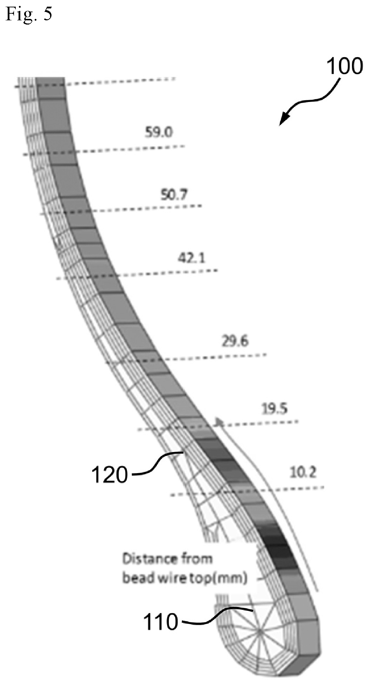

Referring further to Fig.2 through 7, first, in step(S10) where the attachment position of the electronic device is marked on the semi-finished tire product, the position where the electronic device(140) will be attached may be marked before the semi-finished tire product is wound onto the drum.

At this time, the guideline for the attachment position of the electronic device(140) may be provided by marking an infrared line or a separate line on the semi-finished tire product.

The attachment position of the electronic device(140) is defined as the first point(110) where the bead wire and bead wire rubber meet, the second point(120) being the end portion of the bead filler, and the third point(130), which is the end of the carcass and belt.

More specifically, when the electronic device(140) is positioned between the first point(110) and the second point(120), the attachment position may be marked to be located at a point corresponding to 10 to 80% of the length from the first point(110) to the second point(120).

Furthermore, when the electronic device(140) is positioned between the second point(120) and the third point(130) , the attachment location may be indicated to be positioned at a point corresponding to 15 to 95% of the length from the second point(120) to the third point(130).

The attachment position of the electronic device(140) may be provided at the position within the above range where the contact shear strength is the least, and may be provided to be selected while avoiding areas vulnerable to durability.

For example, the attachment position of the electronic device(140) may be arranged to be selected at a point having a radius exceeding 30 mm but not exceeding 60 mm, based on the first point(110) where the bead wire end and the bead wire rubber meet.

More preferably, the attachment position of the electronic device(140) may be arranged to be attached to the inner liner surface at a point having a radius of 41 to 55 mm based on the first point(110) where the bead wire end and the bead wire rubber meet.

Meanwhile, the shape of the electronic device(140) is unrestricted but may be provided in a form having at least one polygonal face, and the attachment surface may be formed to be flat. The electronic device(140) thus provided may be arranged such that when a rubber patch is attached via semi-topping, it is enclosed by the rubber patch without air ingress.

The total length of the electronic device(140) may be provided within 45 to 75 mm, and its width and thickness may be provided within 3 mm . Preferably, the width and thickness of the electronic device(140) may be provided within 0.4 to 0.6 mm.

Furthermore, the electronic device(140) may include an electronic board(141), an antenna(142), and a database(143).

The electronic board(141) may be provided as a PCB board and may be arranged to form electronic chips and circuits. The electronic board(141) may be provided using a single polymer material such as epoxy or a combination of various polymers such as a composite resin of epoxy and phenol.

The antenna(142) may be arranged to transmit and receive data unidirectionally or bidirectionally and may be arranged to generate power. Furthermore, the antenna(142) may be embedded and bonded to the electronic board(141) or may be integrated through processes such as printing, attachment, or connection.

Furthermore, a coating material may be applied over the antenna(142) for protection and adhesive bonding. The coating material may consist of a single polymer, such as epoxy, or a combination of two or more polymers.

The database(143) includes multiple memories, and each memory may be arranged to separately store a tag ID, a tire ID, and tire information.

For this purpose, in one embodiment of the present invention, the database(143) comprises a first memory(141), a second memory(142), and a third memory(143), but the number of memories is not limited thereto.

The memory for recording the tire ID may comprise a memory of 256 bits or less and may include manufacturer, item information, and serial barcode.

Additionally, among the aforementioned memories, a memory of 2,000 bits or less may be provided for recording additional tire information, and the memory may be provided to record additional tire information.

The data stored in the memories of the database(143) may be arranged to use hexadecimal or binary.

The electronic device(140) may include an RFID tag and may be provided as a spring antenna type, film type, or other types. It is typically provided to use the 850 to 950 MHz band, but the frequency is not limited to this range.

Moreover, the electronic device(140) may be provided as a plate-type RFID.

For example, the electronic device(140) provided as a plate-type RFID may be provided in the form of an electronic device(340) as shown in Fig. 3. Specifically, the electronic device(340) may be provided in the form of a base(341), a main chip(342) provided on the base(341), and an antenna(343) printed on the base(341).

The base(341) may be formed of a dielectric material. The dielectric material may be made of FR-4 PCB or FPCB. FR-4 PCB or FPCB is a high-dielectric material relative to air. Furthermore, the base(341) may be provided in a strip form formed longer in length than in width. In this case, the base(341) is formed with a minimum width, thickness, and length that does not damage the tire rubber.

The main chip(342) may be arranged to be mounted at the center of the top surface of the base(341). The main chip(342) may be mounted on the base(341) in a flip chip configuration. When the main chip(342) is mounted on the base(341) in a flip chip configuration, wire bonding is omitted, eliminating the need for soldering, thereby simplifying the manufacturing process. and the connection area between the main chip(342) and the antenna(343) can be connected via a conductor pattern, enhancing the connection reliability of the main chip(342) and the antenna(343).

The antenna(343) can be manufactured as a three-dimensional pattern antenna with left-right symmetry to secure the maximum possible antenna length on the limited base(341).

The antenna(343) may include an upper pattern(344), a lower pattern(345), and a via hole(346).

The upper pattern(344) is formed on the upper surface of the base(341), and the lower pattern(345) is formed on the lower surface of the base(341). The via hole(346) is formed through the base(341) and may be provided to connect each of the plural upper patterns(344) and each of the plural lower patterns(345), thereby forming a pattern inside the base(341).

The upper patterns(344) and lower patterns(345) may be formed by attaching copper foil to the top and bottom surfaces of the base(341) and then etching, or by forming a seed layer and a plating layer on the top and bottom surfaces of the base(341) and then etching.

A plating layer may be further formed in the via hole(346) connecting the upper pattern(344) and the lower pattern(345).

In this plate-type configuration, the antenna(343) is arranged to form a closed loop with a specific pattern, wherein the pitch(P) may denote the spacing between closed loops each comprising one upper pattern(344) and one lower pattern(345).

Next, in the step(S20) of attaching the electronic device to the attachment position, the electronic device(140) may be arranged to be attached to the selected attachment position.

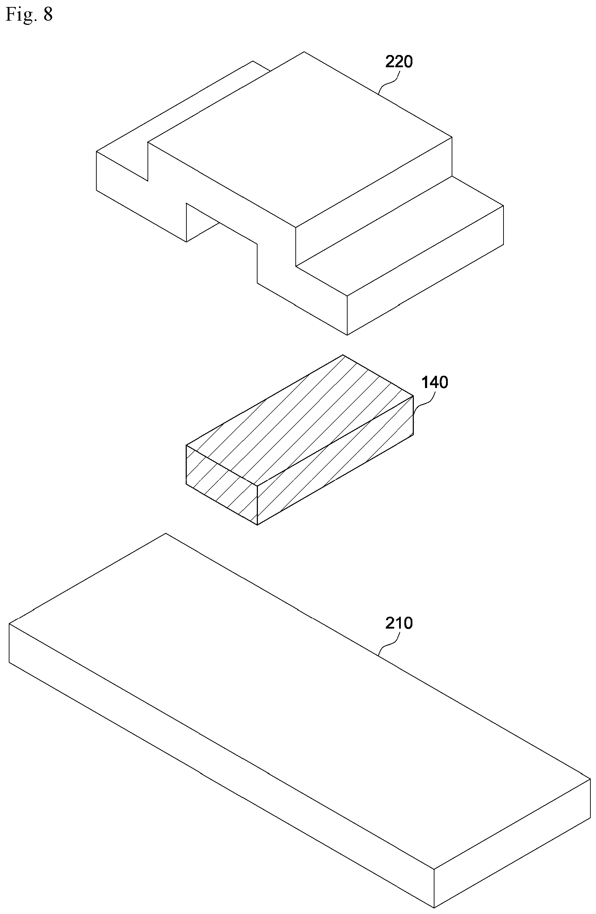

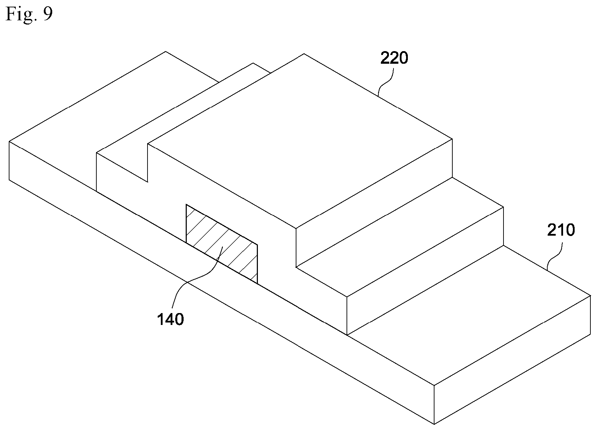

Fig.8 and 9 are illustrative examples showing the process of attaching the electronic device to the tire.

Referring further to Fig.8 and 9, the electronic device(140) may be arranged to be attached to the surface of the inner liner(210) at the attachment location.

Next, in step(S30) where the attached electronic device is covered with a rubber patch made of the same material as the semi-finished tire product, the rubber patch(220) may be affixed to the exposed surface of the electronic device(140) attached to the inner liner(210) to achieve a semi-topping. That is, the electronic device(140) may be arranged to be inserted into the interior of the inner liner(210) as it is partially topped by the rubber patch(220).

At this time, the rubber patch(220) may be provided from the same material as the inner liner(210).

Next, in step(S40) where the semi-finished tire product is wound onto the molding drum to complete molding, the semi-finished tire product with the electronic device(140) attached can be arranged to be wound onto the molding drum for molding.

Next, in the step(S50) of combining the molded semi-finished tire products to form a tire, the molded semi-finished tire products may be arranged to be combined to form a tire(100).

Next, in the step(S60) of attaching a manufacturing barcode to the green tire, the manufacturing barcode may be attached to the molded tire(100).

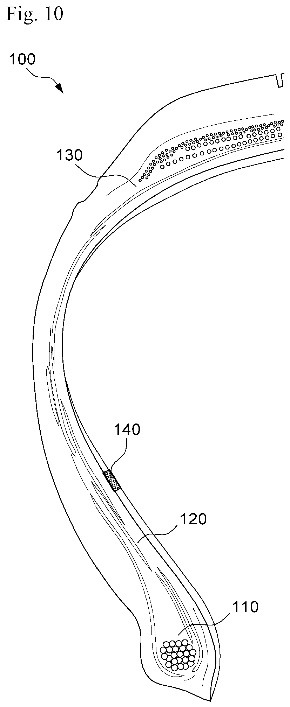

Fig. 10 shows an illustrative diagram showing a tire according to an embodiment of the present invention with an electronic device integrated thereinto.

Referring to Fig. 10, next, in the step of vulcanization the tire to integrate it with the electronic device(S70), the molded tire(100) is cured, and during this process, the tire(100) and the electronic device(140) can be integrated.

Next, in the step of reading and matching the manufacturing barcode and the tag ID of the electronic device and storing the data in a database(S80), information matching the manufacturing barcode attached to the tire(100) and the tag ID of the electronic device(140) can be arranged to be stored in the database(143). Accordingly, the electronic device(140) and the tire(100) can be mutually matched.

Next, in step(S90) of calling the information recorded in the electronic device from the tire manufacturing information system and storing it in the database based on the tag ID, the electronic device(140) at may be arranged to receive relevant information about the tire(100) corresponding to the manufacturing barcode from the tire manufacturing information system provided on an external server, and to store the received information based on the tag ID.

Next, in step(S100) of encrypting and providing to the user the supplementary information recorded in the database based on the stored tag ID via the network API, the information requested by the user may be arranged to be stored in the database(143) as a binary number within 96 bits or 512 to 2,000 bits. Furthermore, the information about the tire(100) stored in the database(143) may be arranged to be encrypted and provided to the user via the network API.

The present invention thus provided may be arranged to be used when providing data online by pairing the manufacturing barcode of the tire(100) with the tag ID of the electronic device(140).

Hereinafter, the manufacturing method of a tire integrated with an electronic device according to a second embodiment will be described.

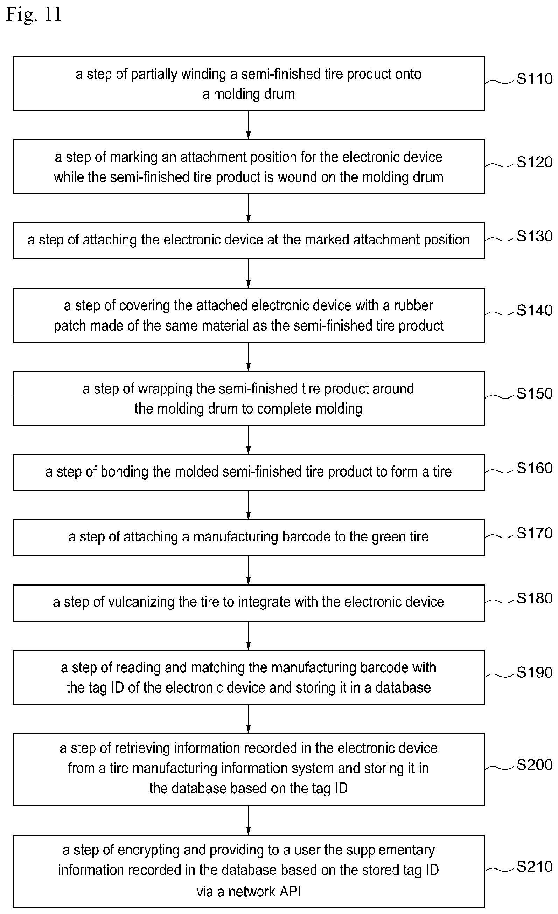

Fig. 11 shows a flowchart of a manufacturing method for a tire with an integrated electronic device according to a second embodiment of the present invention.

Referring to Fig. 11, the manufacturing method for a tire with an integrated electronic device according to the second embodiment comprises: a step of partially winding a semi-finished tire product onto a molding drum(S110); a step of marking an attachment position for the electronic device while the semi-finished tire product is wound on the molding drum(S120); attaching the electronic device at the marked attachment position (S130), covering the attached electronic device with a rubber patch made of the same material as the semi-finished tire product (S140), wrapping the semi-finished tire product around the molding drum to complete molding (S150), bonding the molded semi-finished tire product to form a tire (S160), attaching a manufacturing barcode to the green tire (S170), vulcanizing the tire to integrate with the electronic device (S180), reading and matching the manufacturing barcode with the tag ID of the electronic device and storing it in a database (S190), retrieving information recorded in the electronic device from a tire manufacturing information system and storing it in the database based on the tag ID (S200), and encrypting and providing to a user the supplementary information recorded in the database based on the stored tag ID via a network API (S210).

Referring further to Fig.2 through 7, first, in the step of partially winding the semi-finished tire product onto the forming drum(S110), the semi-finished tire product may be arranged to be partially wound onto the forming drum.

Next, in the step(S120) of indicating the attachment position of the electronic device while the semi-finished tire product is wound on the forming drum, the position where the electronic device(140) is to be attached may be indicated while the semi-finished tire product is partially wound on the forming drum.

At this time, the guideline for the attachment position of the electronic device(140) may be provided by marking an infrared line or a separate line on the semi-finished tire product.

The attachment position of the electronic device(140) is defined as the first point(110) where the bead wire and bead wire rubber meet, the second point(120) being the end portion of the bead filler, and the third point(130), which is the end of the carcass and belt.

More specifically, when the electronic device(140) is positioned between the first point(110) and the second point(120), the attachment position may be marked to be located at a point corresponding to 10 to 80% of the length from the first point(110) to the second point(120).

Furthermore, when the electronic device(140) is positioned between the second point(120) and the third point(130), the attachment location may be indicated to be positioned at a point corresponding to 15 to 95% of the length from the second point(120) to the third point(130).

The attachment position of the electronic device(140) may be provided at the position within the above range where the contact shear strength is the least and may be provided to be selected while avoiding areas vulnerable to durability.

For example, the attachment position of the electronic device(140) may be selected to be at a point having a radius exceeding 30 mm but not exceeding 60 mm, based on the first point(110) where the bead wire end and the bead wire rubber meet.

More preferably, the attachment position of the electronic device(140) may be arranged to be attached to the inner liner surface at a point having a radius of 41 to 55 mm based on the first point(110) where the bead wire end and the bead wire rubber meet.

Meanwhile, the shape of the electronic device(140) is unrestricted but may be provided in a form having at least one polygonal face, and the attachment surface may be formed to be flat. The electronic device(140) thus provided may be arranged to be enclosed by the rubber patch without air ingress when the rubber patch is attached as a half-top.

The total length of the electronic device(140) may be provided within 45 to 75 mm, and its width and thickness may be provided within 3 mm. Preferably, the width and thickness of the electronic device(140) may be provided within 0.4 to 0.6 mm.

The configuration of the electronic device(140) is the same as described above, and specific details are omitted at .

Next, in the step(S130) of attaching the electronic device to the attachment position, the electronic device(140) may be arranged to be attached to the selected attachment position. That is, the electronic device(140) may be arranged to be attached while the semi-finished tire product is partially wound on the forming drum.

Fig.8 and 9 are illustrative examples showing the process of attaching the electronic device to the tire.

Next, in the step(S140) where the attached electronic device is covered with a rubber patch made of the same material as the semi-finished tire product, the rubber patch(220) may be affixed to the exposed surface of the electronic device(140) attached to the inner liner(210) to partially cover it. That is, the electronic device(140) may be arranged to be inserted into the interior of the inner liner(210) as it is partially topped by the rubber patch(220).

At this time, the rubber patch(220) may be provided from the same material as the inner liner(210).

Meanwhile, the rubber patch(220) may be provided from the same material as the carcass rubber when attached to the side of the electronic device(140) carcass , and may be provided from the same material as the sidewall rubber when the electronic device(140) is attached to the sidewall.

Specifically, the spacing between the carcass cord(161) and the spacing between the antenna units may be set differently.

Meanwhile, the rubber patch(220) may be provided from the same material as the carcass rubber when attached to the side of the electronic device(140) carcass, and may be provided from the same material as the sidewall rubber when the electronic device(140) is attached to the sidewall.

Next, in the step(S150) where the semi-finished tire product is wound onto the molding drum to complete molding, the semi-finished tire product with the electronic device(140) attached may be wound onto the molding drum to complete the remaining molding.

Next, in the step(S160) where the completed molded semi-finished tire products are joined to form a tire, the completed molded semi-finished tire products may be joined to form a tire(100).

Next, in step(S170) where a manufacturing barcode is attached to the green tire, the manufacturing barcode may be attached to the molded tire(100).

Fig. 10 is an illustrative diagram showing a tire according to an embodiment of the present invention with an electronic device integrated thereinto.

Referring to Fig. 10, in the step of vulcanization the tire to integrate it with the electronic device(140)(S180), the molded tire(100) is cured, and during this process, the tire(100) and the electronic device(140) can be integrated.

Next, in the step(S190) of reading and matching the manufacturing barcode and the tag ID of the electronic device and storing the data in a database, information matching the manufacturing barcode attached to the tire(100) and the tag ID of the electronic device(140) may be arranged to be stored in the database(143). Accordingly, the electronic device(140) and the tire(100) can be mutually matched.

Next, in step(S200) of calling the information recorded in the electronic device from the tire manufacturing information system and storing it in the database based on the tag ID, the electronic device(140) may be arranged to receive relevant information about the tire(100) corresponding to the manufacturing barcode from the tire manufacturing information system provided on an external server and to store the received information based on the tag ID.

Next, in step(S210) of encrypting and providing to the user the supplementary information recorded in the database based on the stored tag ID via the network API, the information requested by the user may be arranged to be stored in the database(143) as a binary number within 96 bits or 512 to 2,000 bits. Furthermore, the information about the tire(100) stored in the database(143) at can be arranged to be encrypted and provided to the user via the network API.

The present invention thus provided may be arranged to be used when providing data online by pairing the manufacturing barcode of the tire(100) with the tag ID of the electronic device(140).

Furthermore, the present invention, as described above, facilitates the attachment of the electronic device(140) to the tire(100) during the manufacturing process. Since the semi-finished tire product is integrated, damage to the electronic device(140) can be minimized.

Although the present invention was described with reference to limited drawings, the above description is provided as an exemplary example of the present invention, and it should be understood that the present invention may be easily modified in other various ways without changing the spirit or the necessary features of the present invention by those skilled in the art. Therefore, the examples described above are only exemplary and should not be construed as being limitative in all respects. For example, the components described as single parts may be divided and the components described as separate parts may be integrated. Further, the techniques described above may be performed in a different order from the described method.

The embodiments described herein and the accompanying drawings merely illustrate some of the technical ideas included in the present invention. Therefore, the scope of the present invention is defined by the appended claims, and all modifications or variations derived from the meaning and scope of the claims and their equivalents should be interpreted as falling within the scope of the present invention.

### <Reference Signs>

- 100:: Tire
- 110:: Fist Point
- 120:: Second Point
- 130:: Third Point
- 140:: Electronic device
- 141:: Electronic board
- 142:: Antenna
- 143:: Database
- 144:: First Memory
- 145:: Second Memory
- 146:: Third Memory
- 210:: Inner liner
- 220:: Rubber Patch
- 340:: Electronic Device
- 341:: Base
- 342:: Electronic Chip
- 343:: Antenna
- 344:: Upper Pattern
- 345:: Lower Pattern
- 346:: Via Hole

## Claims

1. A manufacturing method for a tire with an integrated electronic device comprising:
a step of marking an attachment position of the electronic device on the semi-finished tire product;
a step of attaching the electronic device at the marked attachment position;
a step of covering the attached electronic device with a rubber patch made of the same material as the semi-finished tire product;
a step of wrapping the semi-finished tire product around a molding drum to complete molding; and
a step of bonding the molded semi-finished tire product to form a tire.

2. A manufacturing method for a tire with an integrated electronic device comprising:
a step of partially winding a semi-finished tire product onto a molding drum;
a step of marking an attachment position for the electronic device while the semi-finished tire product is wound on the molding drum;
a step of attaching the electronic device at the marked attachment position;
a step of covering the attached electronic device with a rubber patch made of the same material as the semi-finished tire product;
a step of wrapping the semi-finished tire product around the molding drum to complete molding; and
a step of bonding the molded semi-finished tire product to form a tire.

3. According to the claim 1 or claim 2,
after the step of bonding the molded semi-finished tire product to form a tire, further comprising:
a step of attaching a manufacturing barcode to the green tire; and
a step of vulcanizing the tire to integrate with the electronic device.

4. A manufacturing method of claim 3,
after the step of vulcanizing the tire to integrate with the electronic device, further comprising:
a step of reading and matching the manufacturing barcode with the tag ID of the electronic device and storing it in a database;
a step of retrieving information recorded in the electronic device from a tire manufacturing information system and storing it in the database based on the tag ID; and
a step of encrypting and providing to a user the supplementary information recorded in the database based on the stored tag ID via a network API.

5. A manufacturing method of claim 4,
wherein the electronic device is provided with three or more separate memories, and each of the memories is provided to separately store and provide the tag ID, tire ID, and tire information.

6. According to the claim 1 or claim 2,
wherein the electronic device is attached to the inner liner surface at a point having a radius of 30 to 60 mm, based on a first point where an end point of the bead wire and the bead wire rubber meet.

7. A manufacturing method of claim 6,
wherein the electronic device is attached to the inner liner surface at a point having a radius of 41 to 55 mm based on the first point where an end point of the bead wire and the bead wire rubber meet.

8. According to the claim 1 or claim 2,
wherein the first point is where the bead wire and bead wire rubber meet, the second point is where the end of the bead filler, and the third point is where the end of the carcass and belt,
wherein the electronic device is positioned between the first point and the second point or between the second point and the third point.

9. A manufacturing method of claim 8,
wherein the electronic device is positioned at a point corresponding to 10 to 80 % of the length from the first point to the second point between the first point and the second point.

10. A manufacturing method of claim 8,
wherein the electronic device is positioned at a point corresponding to 15 to 95% of the length from the second point to the third point between the second point and the third point.

11. A tire with an integrated electronic device manufactured by the method of claim 1 or claim 2,
wherein the first point is where the bead wire and bead wire rubber meet, the second point is where the end of the bead filler, and the third point is where the end of the carcass and belt,
wherein the electronic device is positioned between the first point and the second point or between the second point and the third point.

12. A tire of claim 11,
wherein the electronic device is provided in a form where it is attached to the inner liner surface, the electronic device is partially covered by the rubber patch, and inserted into the interior of the inner liner.

13. A tire of claim 12,
wherein the rubber patch of the electronic device is the same physical properties as the inner liner.
